# EUROPEAN PATENT APPLICATION

(11) **EP 2 410 598 A1**
(43) Date of publication of application: **25.01.2012**
(21) Application number: 11174648.3
(22) Date of filing: 20.07.2011
(51) Int. Cl.: H01M 8/02, H01M 8/12

(54) **Electrode Material and Solid Oxide Fuel Cell Containing the Electrode Material**

(30) Priority: 21.07.2010 JP 2010164012; 20.05.2011 JP 2011114050
(71) Applicant: NGK Insulators, Ltd., Nagoya-city, Aichi 467-8530 (JP)
(72) Inventor: KOBAYASHI, Ayano, Nagoya, Aichi 467-8530 (JP); FUJISAKI, Shinji, Nagoya, Aichi 467-8530 (JP); OHMORI, Makoto, Nagoya, Aichi 467-8530 (JP)
(74) Representative: Paget, Hugh Charles Edward

(57) **Abstract**

The electrode material contains a complex oxide having a perovskite structure represented by a general formula ABO₃. Each A-site element having a standard deviation of an atomic concentration of 10.3 or less. The atomic concentration is measured by energy dispersive X-ray spectroscopy at ten spots within one field of view.

## Description

This application claims priority to Japanese Patent Application No.2010-164012 filed on July 21, 2010 and Japanese Patent Application No. 2011-114050, filed on May 20, 2011. The entire disclosure of Japanese Patent Application No. 2010-164012 and Japanese

Patent Application No. 2011-114050 is hereby incorporated herein by reference.

### BACKGROUND OF THE INVENTION

### Field of the Invention

The present invention relates to an electrode material and a solid oxide fuel cell provided with a cathode formed with the electrode material.

### Description of the Related Art

In recent years, fuel cells have been attracting attention from the environmental viewpoint and from the viewpoint of effective use of energy resources, and several materials and structures have been proposed for fuel cells.

Patent Document (see Japanese Patent Application Laid-Open No. 2006-32132) discloses use of LSCF powder as base powder of the cathode of a solid oxide fuel cell (SOFC).

### SUMMARY OF THE INVENTION

However, repetitive power generation using a fuel cell may result in lowered available voltage.

The inventors newly found that one of the reasons of voltage decrease is deterioration of the cathode.

The present invention was accomplished based on this finding, and an object of the present invention is to provide a novel electrode material and to provide a solid oxide fuel cell that includes the electrode material.

As a result of having conducted diligent research to address the above-described problem, the inventors newly found that electrode deterioration can be inhibited by enhancing uniformity of the concentrations of the components of the electrode material.

That is, the electrode material according to the first aspect of the present invention contains a complex oxide having a perovskite structure represented by a general formula ABO₃. Each A-site element having a standard deviation of an atomic concentration of 10.3 or less. The atomic concentration is measured by energy dispersive X-ray spectroscopy at ten spots within one field of view.

The solid oxide fuel cell according to the second aspect of the present invention is provided with a cathode composed of the electrode material, an anode, and a solid electrolyte layer disposed between the cathode and the anode.

The electrode material is suitable as, for example, a material for forming the electrode of a fuel cell. Deterioration of an electrode formed with the electrode material is inhibited, and the electrode demonstrates excellent durability.

### BRIEF DESCRIPTION OF THE DRAWINGS

FIG 1 is a cross sectional view showing the structure of the principal part of a vertically -striped fuel cell.
FIG 2 shows SEM images and concentration mapping images over one field of view of Sample No. 1.
FIG 3 shows SEM images and concentration mapping images over one field of view of Sample No. 7.
FIG 4 is a perspective view showing the appearance of a segmented-in-series fuel cell.
FIG 5 is a cross-sectional view taken along the arrow I-I in FIG 4.

### DETAILED DESCRIPTION OF THE INVENTION

### 1. Electrode material

The electrode material contains a complex oxide having a perovskite structure. The electrode material may contain a component other than the complex oxide.

The composition of the complex oxide is represented by a formula ABO₃. The A site may include at least one of La and Sr. Specific examples of such complex oxides include LSCF or (LaSr)(CoFe)O₃, LSF or (LaSr)FeO₃, LSC or (LaSr)CoO₃, LNF or La(NiFe)O₃, SSC or (SmSr)CoO₃, and like materials. These complex oxides are materials that have both oxygen ion conductivity and electron conductivity, and are called mixed conductive materials. These complex compounds are suitable as materials of the cathode of a fuel cell.

The electrode material may contain the complex oxide as a "principal component." The phrase "composition X contains material Y as a principal component" means that material Y accounts for preferably 60 wt% or greater, more preferably 70 wt% or greater, and still more preferably 90 wt% or greater relative to the entire composition X.

The electrode material may be a powder (for example, having an average particle diameter of about 0.1 µm to 5 µm) or may be pulverized matter (for example, having an average particle diameter of about 5 µm to 500 µm) or a lump larger than the pulverized matter.

It is preferable that the electrode material has a highly uniform distribution of the components. Specifically, when the atomic concentration of each A-site element is measured by energy dispersive X-ray spectroscopy (EDS) at ten spots within a randomly selected field of view on the electrode material to obtain the standard deviation of the atomic concentration, the standard deviation obtained in the A site is preferably 10.3 or less.

For example, let us assume that the A site is occupied by A1, A2, A3 and so on up to An, i.e., n kinds of elements. When the standard deviation of the atomic concentration of each element is obtained based on the atomic concentrations obtained at ten spots, and the standard deviation of the atomic concentration of the element A1 is greater than the standard deviation of any of the elements A2 to An, the standard deviation for the element A1 is preferably 10.3 or less.
The term "randomly selected field of view" as used herein may refer to a region observable with an electron microscope such as a scanning electron microscope (SEM) or an electron probe microanalyzer (EPMA) at 100 to 5000-fold magnification. The size of each of the ten spots can be no more than 1 µm.
The locations of the ten spots can be selected according to ten-scale concentration levels set based on the atomic concentration distribution measured by, for example, an EPMA. It is preferable that the ten-scale concentration levels are set across the substantially entire range of the atomic concentration distribution. For example, the ten-scale concentration levels can be set by dividing the breadth of the maximum value and the minimum value of the intensity of characteristic X-ray within a randomly selected field of view into ten.

### 2. Method for producing electrode material

An example of a method for producing the electrode material of section 1 above will now be described below.

Specifically, the production method includes obtaining a complex oxide having a perovskite structure.

Examples of methods for obtaining the complex oxide include solid phase processes, liquid phase processes (such as citrate process, Pechini process, and co-precipitation process), and the like.

The "solid phase process" is a technique to obtain the desired material by mixing, at a specific ratio, ingredients (powders) that contain constituent elements to give a mixture, calcining the mixture, and triturating the mixture.

The "liquid phase process" is a technique to obtain the desired material through the steps of:
· dissolving ingredients that contain constituent elements in a solution,
· obtaining a precursor of the desired material from the solution by precipitation or the like, and
· performing drying, calcination, and trituration.

Another factor that can control the composition distribution in the electrode material, in addition to the kind of ingredient, the method for mixing the ingredients, and the conditions under which the ingredients are mixed, may be a synthesizing temperature (900°C to 1400°C, 1 to 30 hours).

The production method may include triturating the resulting complex oxide. Trituration is performed with, for example, a ball mill. The complex oxide may be pulverized before trituration. That is, it is possible that a lump of a material having a perovskite structure is prepared, broken down (pulverized), and then triturated more finely. Through these steps, the average particle diameter of the material is controlled to 20 µm or less, 5 µm or less, or 1 µm or less.

### 3. Vertically -striped Fuel Cell (solid oxide fuel cell)

A solid oxide fuel cell (SOFC) will now be described as an example of a fuel cell stack. In particular, an SOFC stack having a cell stack structure in which a plurality of fuel cells are stacked will be mainly described below.

### 3-1. Outline of fuel cell stack

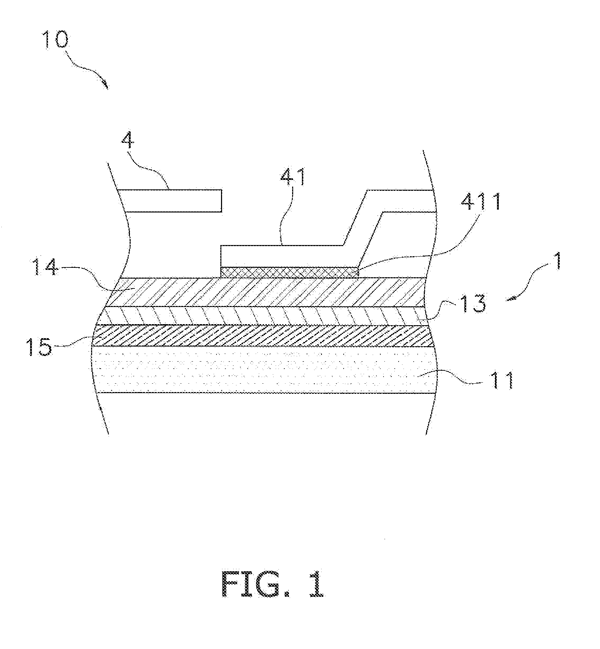

As shown in FIG 1, a fuel cell stack 10 is provided with a fuel cell 1 (hereinafter simply referred to as a "cell") and a current collector 4.

### 3-2. Outline of cell 1

The cell 1 is a thin plate of ceramic. The thickness of the cell 1 is, for example, 30 µm to 700 µm, and the diameter of the cell 1 is, for example, 5 mm to 50 mm. As shown in FIG 1, the cell 1 is provided with an anode 11, a barrier layer 13, a cathode 14, and an electrolyte layer (solid electrolyte layer) 15.

### 3-3. Anode

As the material of the anode 11, for example, a material that is for use in forming an anode in a known fuel cell is used. More specific examples of the material of the anode 11 include nickel oxide - yttria-stabilized zirconia (NiO-YSZ) and/or nickel oxide - yttria (NiO-Y2O₃). The anode 11 can contain these materials as principal components.

The anode 11 may function as a substrate that supports other layers included in the cell 1 (the substrate may also be referred to as a support). That is, the anode 11 may have the largest thickness among the layers included in the cell 1. Specifically, the thickness of the anode 11 may be 10 µm to 600 µm.

Electric conductivity can be imparted to the anode 11 by subjecting the anode 11 to a reduction treatment (for example, a treatment to reduce NiO to Ni).

Moreover, the anode 11 may have two or more layers. For example, the anode 11 may have two layers, i.e., a substrate and an anode active layer (fuel side electrode) formed thereon. The substrate is composed of a material that contains an electron conductive substance. The anode active layer is composed of a material that contains an electron conductive substance and an oxidizing-ion (oxygen ion) conductive substance. The "proportion of the volume of the oxidizing-ion (oxygen ion) conductive substance relative to the total volume, which does not include the volume of the pores," in the anode active layer is greater than the "proportion of the volume of the oxidizing-ion (oxygen ion) conductive substance relative to the total volume, which does not include the volume of the pores," in the substrate. The materials of the substrate and the anode active layer can be selected from the materials of the anode 11 described above. More specifically, a substrate composed of NiO-Y₂O₃ and an anode active layer composed of NiO-YSZ may be combined.

### 3-4. Barrier layer

The barrier layer 13 is provided between the cathode 14 and the anode 11, and more specifically the barrier layer 13 is provided between the cathode 14 and the electrolyte layer 15.

The barrier layer 13 contains cerium. The barrier layer may contain cerium in the form of ceria (cerium oxide). Specific examples of the material of the barrier layer 13 include ceria and ceria-based materials containing a rare earth metal oxide and forming a solid solution with ceria. The barrier layer 13 can contain a ceria-based material as a principal component.

Specific examples of the ceria-based material include gadolinium-doped ceria (GDC: (Ce,Gd)O₂), samarium-doped ceria (SDC: (Ce,Sm)O₂), and the like. The concentration of rare earth metal in the ceria-based material is preferably 5 to 20 mol%. The barrier layer 13 may contain an additive in addition to the ceria-based material.

The thickness of the barrier layer 13 may be 30 µm or less.

The barrier layer 13 can inhibit diffusion of cation from the cathode 14 into the electrolyte layer 15. That is, the barrier layer 13 can inhibit a decrease of output density and extend the life of the cell 1.

### 3-5. Cathode

The cathode 14 is composed of the electrode material described in section 1 above. The thickness of the cathode 14 may be about 5 µm to 50 µm.

### 3-6. Electrolyte layer

The electrolyte layer 15 is provided between the barrier layer 13 and the anode 11.

The electrolyte layer 15 contains zirconium. The electrolyte layer 15 may contain zirconium in the form of zirconia (ZrO₂). Specifically, the electrolyte layer 15 can contain zirconia as a principal component. The electrolyte layer 15 can contain, in addition to zirconia, additives such as Y₂O₃ and/or Sc2O₃. Such additives can function as stabilizers. The amount of additive in the electrolyte layer 15 is about 3 to 20 mol%. That is, examples of the material of the electrolyte layer 15 include zirconia-based materials such as yttria-stabilized zirconia, e.g., 3YSZ, 8YSZ, and 10YSZ; scandia-stabilized zirconia (ScSZ); and the like.

The thickness of the electrolyte layer 15 may be 30 µm or less.

### 3-7. Current collector

The current collector 4 is provided with a plurality of conductive connectors 41.

As shown in FIG 1, a conductive connector 41 is a depression provided in the current collector 4, and the bottom thereof is connected to the cathode 14 via a conductive adhesive 411. The bottom of the conductive connector 41 has a portion that is discontinuous with its surroundings.

During power generation, fuel gas is supplied to the anode 11. Air is supplied to the cathode 14 by blowing air toward the side-surface of the cell stack structure (for example, toward the surface of the paper showing FIG 1).

Although not shown, the fuel cell stack 10 is further provided with a lead wire that sends the electric current generated in the cell stack 10 to an external apparatus, a gas reformer that includes, e.g., a catalyst to reform fuel gas, and a like member.

### 4. Method for producing fuel cell

### 4-1. Formation of anode

The anode 11 can be formed by compacting molding. That is, the formation of the anode 11 may include introducing mixed powder of the materials of the anode 11 into a mold and compacting the powder to give a green compact.

The materials of the anode 11 are as discussed in connection with the configuration of the fuel cell in the description provided above. For example, nickel oxide, zirconia, and optionally a pore-forming agent are used as the materials. The pore-forming agent is an additive to create holes in the anode. As the pore-forming agent, a material that disappears in a subsequent process is used. An example of such a material may be cellulose powder.

The ratio of the materials mixed is not particularly limited and is suitably set according to the properties required of the fuel cell.

Also, the pressure applied to the powder during compacting molding is set such that the anode has sufficient rigidity.

The internal structure of the anode 11, e.g., a gas passage (not shown), may be formed by covering with the powder a member that disappears when calcined (a cellulose sheet or the like), performing compacting molding, and then calcining.

### 4-2. Formation of electrolyte layer

The method for producing a fuel cell includes forming an electrolyte layer on the anode green body formed by compacting molding.

Examples of methods for forming an electrolyte include cold isostatic pressing (CIP) method and thermocompression bonding both of which use an electrolyte material processed into a sheet form, and slurry dip method in which an anode is dipped into an electrolyte material that has been prepared so as to take a slurry form. In CIP method, the pressure applied during the compression bonding of the sheet is preferably 50 to 300 MPa.

### 4-3. Calcination

The method for producing a fuel cell includes co-calcining (co-sintering) the anode that has been compacting-molded and the electrolyte layer. The temperature and the duration of calcination are set according to the materials of the cell and other factors.

### 4-4. Degreasing

Degreasing may be performed before the calcination described in section 4-3 above. Degreasing is performed by heating. Conditions such as degreasing temperature and degreasing time are set according to the materials of the cell and other factors. The degreasing temperature can be set to, for example, about 600°C to 900°C, and the degreasing time can be set to, for example, about 1 hour to 20 hours.

### 4-5. Formation of cathode

The cathode is formed by, for example, forming a layer of cathode materials according to compacting molding, printing, or a like process on a laminate of the anode, the electrolyte layer, and the barrier layer, and then performing calcination.

### 4-6. Other processes

According to the configuration of the fuel cell, the production method may include an additional step, or the above-described steps may be modified. For example, the production method may include a step of providing a reaction preventive layer between the electrolyte layer and the cathode, or may include steps of forming an anode having a two-layer structure (a step of forming a substrate and a step of forming an anode active layer).

### 5. Segmented-in-series Fuel Cell

The fuel cell stack 10 described above is provided with a plurality of stacked cells 1 and current collectors 4 that electrically connect the cells 1. That is, the fuel cell stack 10 is a vertically-striped fuel cell stack. However, the present invention is applicable also to a segmented-in-series fuel cell. A description will now be given below of a segmented-in-series fuel cell.

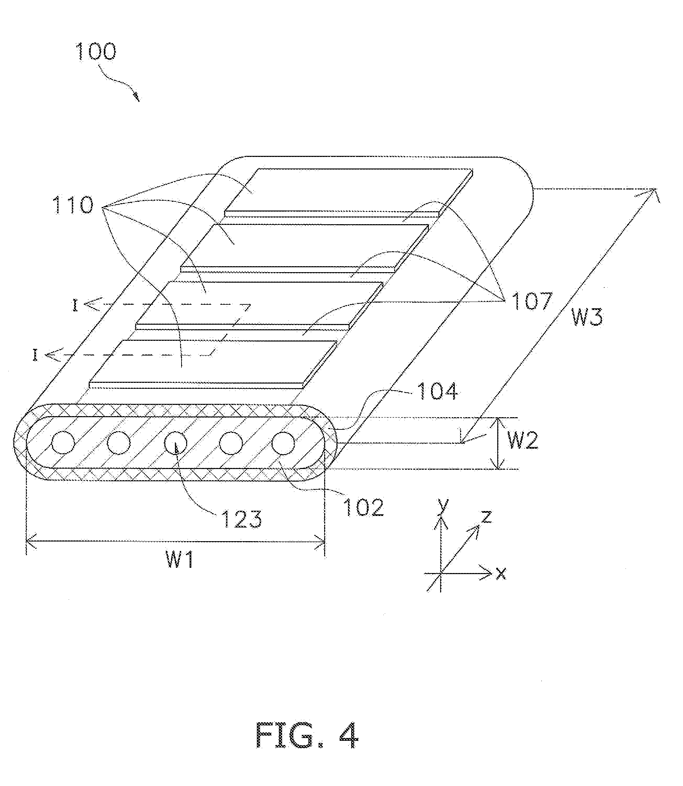

The segmented-in-series fuel cell (hereinafter simply referred to as a "fuel cell ") 100 is provided with a support base plate 102, an anode 103, an electrolyte layer 104, a cathode 106, an interconnector 107, a current collector 108, and a barrier layer 13. Moreover, the fuel cell 100 is provided with cells 110. Components that are identical to the components that have already been described are given the same reference numbers, and the description thereof may be omitted. In FIG 4, the current collector 108 is not shown for convenience of description.

The fuel cell 100 includes a plurality of cells 110 disposed on the support base plate 102 and an interconnector 107 that is electrically connected between the cells 110. The cells 110 include an anode 103 and a cathode 106 that corresponds to the anode 103. More specifically, the cell 110 includes an anode 103, an electrolyte layer 104 and a cathode 106 stacked with reference to the thickness direction (y axis direction) of the support base plate 102. The anode 103, the electrolyte layer 104, and the cathode 106 constitute the power generating element of the cell 110.

The support base plate 102 is flat and elongated in one direction (z axis direction). The support base plate 102 is an electrically insulating porous substrate that has insulating properties. The support base plate 102 may include nickel. More specifically, the support base plate 102 may contain Ni-Y₂O₃ (nickel yttria) as a main component. The nickel may be included as an oxide (NiO). During power generation, NiO may be reduced to N by oxygen gas.

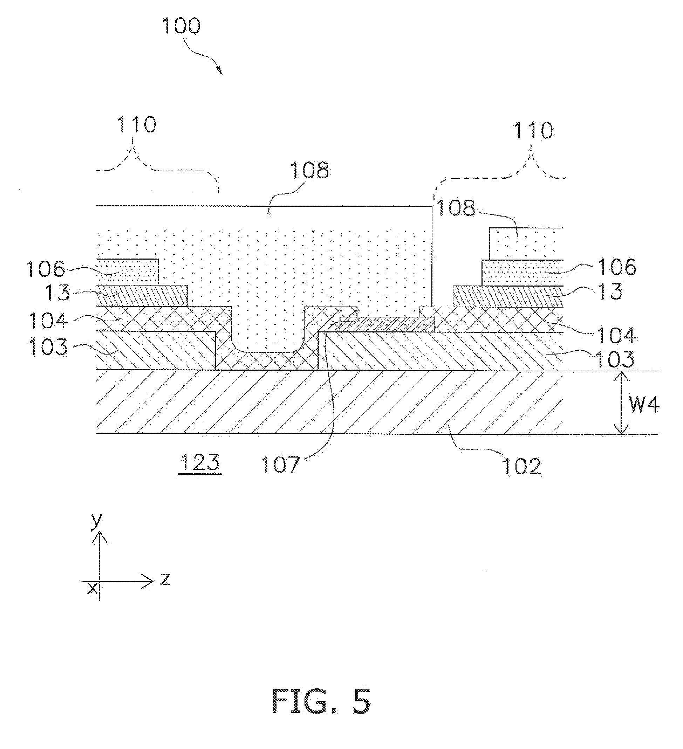

As shown in FIGs. 4 and 5, a flow path 123 is provided in an inner portion of the support base plate 102. The flow path 123 extends along the longitudinal direction (z axis direction) of the support base plate 102. During power generation, fuel gas flows into the flow path 123, through the hole that is provided in the support base plate 102 to thereby supply fuel gas to the anode 103 described below.

The anode 103 is provided on the support base plate 102. A plurality of anodes 103 is disposed on a single support base plate 102 and arranged in the longitudinal direction (z axial direction) of the support base plate 102. That is to say, a space is provided between adjacent anodes 103 in the longitudinal direction (z axis direction) of the support base plate 102.

The composition of the anode 103 may be the same as the composition of the anode 11. The anode 103 may include an anode current collecting layer and an anode active layer. The anode current collecting layer is provided on the support base plate 102, and the anode active layer is provided to avoid superimposition with respect to the interconnector 107 on the anode current collecting layer.

The anode 103 may include an anode current collecting layer and an anode active layer. The anode current collecting layer is provided on the support base plate 102 and the anode active layer is provided on the anode current collecting layer. The composition of the anode current collecting layer and the anode active layer has been described above.

The electrolyte layer 104 is also termed a solid electrolyte layer. As illustrated in FIG 5, the electrolyte layer 104 is provided on the anode 103. In a region that is not provided with the anode 103 on the support base plate 102, the electrolyte layer 104 may be provided on the support base plate 102.

The electrolyte layer 104 includes a non-connected position in the longitudinal direction (z axis direction) of the support base plate 102. In other words, a plurality of electrolyte layers 104 is disposed at an interval in the z axis direction. Namely, the plurality of electrolyte layers 104 are provided along the longitudinal direction (z axis direction) of the support base plate 102.
Electrolyte layers 104 adjacent in the z axis direction are connected by an interconnector 107. In other words, the electrolyte layers 104 are provided to be connected from an interconnector 107 to an interconnector 107 that is adjacent to that interconnector 107 in the longitudinal direction (z axis direction) of the support base plate 102. The interconnector 107 and the electrolyte layer 104 have a dense structure in comparison to the support base plate 102 and the anode 103. Therefore, the interconnector 107 and the electrolyte layer 104 function as a seal portion that partitions air and fuel gas by the provision of a connected structure in the z axis direction in the fuel cell 100.

The composition of the electrolyte layer 104 includes a composition that is the same as the electrolyte layer 15 as described above.

The same description provided in relation to the segmented-in-series fuel cell applies to the configuration of the barrier layer 13 and the intermediate layer 16. The barrier layer 13 is provided between the electrolyte layer 104 and the cathode 106.

The cathode 106 is disposed on the barrier layer 13 without projecting from the outer edge of the barrier layer 13. One cathode 106 is stacked on one anode 103. That is to say, a plurality of cathodes 106 is provided along the longitudinal direction (z axis direction) of the support base plate 102 on a single support base plate 102.

The cathode 106, as with the cathode 14 described above, is composed of the electrode materials described in section 1 above.

As described above, the interconnector 107 may be disposed to configure electrical contact between the cells 110. In FIG 5, the interconnector 107 is stacked onto the anode 103.

The term "stacked" as used herein encompasses a case where two elements are disposed so as to be in contact, and a case where two elements are disposed so as to overlap in the y-axis direction.

In FIG 5, as described above, the interconnector 107 is disposed to connect the electrolyte layers 104 in the longitudinal direction (z axis direction) of the support base plate 102. In this manner, cells 110 that are adjacent in the longitudinal direction (z axis direction) of the support base plate 102 are electrically connected.

The interconnector 107 constitutes an electrode that is used to electrically connect the cells 110. Specifically, the interconnector 107 shown in FIG 5 functions as an electrode of the cell 110 that is located on the right side in FIG 5.
The interconnector 107 constituting an electrode, as with the cathode 106 described above, is composed of the electrode materials described in section 1 above.
That is, the interconnector 107 contains a perovskite complex oxide as a principal component. In particular, a specific example of the perovskite complex oxide used for the interconnector 107 may be a chromite-based material such as lanthanum chromite (LaCrO₃).

Here, the compositional formula of lanthanum chromite can be represented by a general formula (1) below:

Ln1-xAxCr1-y-zByO₃ (1)

In the formula (1), Ln is at least one element selected from the group consisting of Y and lanthanoids; A is at least one element selected from the group consisting of Ca, Sr, and Ba; B is at least one element selected from the group consisting of Ti, V, Mn, Fe, Co, Cu, Ni, Zn, Mg, and Al; and 0.025≤x≤0.3, 0≤y≤0.22, and 0≤z≤0.15.
Such lanthanum chromite is a material that can stably exist at temperatures at which the SOFC operates (600°C to 1000°C) in both air and a reducing atmosphere, and therefore is preferably used as an interconnector material (electrode material) for the cells of SOFCs including segmented-in-series fuel cell type.

However, lanthanum chromite is known to be a material resistant to sintering, and in order to co-sinter it with the support base plate 102, the anode 103, the electrolyte layer 104, and like members for application to an SOFC, it is therefore necessary to add a sintering aid (CaO, SrO, or the like) to make calcination easy.
Therefore, it is preferable as described above that the interconnector material (electrode material) to which a sintering aid has been added also has a highly uniform composition distribution. Specifically, when the atomic concentration of each A-site element is measured by EDS at ten spots within a randomly selected field of view on the interconnector material to obtain the standard deviation of the atomic concentration, the standard deviation obtained in the A site is preferably 10.3 or less.
It is thus possible to make the interconnector 107 compact as a whole, thereby enabling generation of a region (pinhole) where calcination is locally insufficient in the interconnector 107 to be inhibited. As a result, the reliability of the interconnector 107 can be enhanced.

The current collector 108 is disposed to electrically connect the interconnector 107 and the cell 110. More specifically, the current collector 108 provides a connection from the cathode 106 to the interconnector 107 included in a cell 110 that is adjacent to a cell 110 with the cathode 106. The current collector 108 may have conductive properties.

The cathode 106 contained in the cell 110 is electrically connector with the anode 103 of the adjacent cell 110 by the current collector 108 and the interconnector 107. That is to say, in addition to the interconnector 107, the current collector 108 also may participate in the connection between the cells 110.

More specifically, the dimensions of each portion of the fuel cell 100 may be set as described hereafter.
Width W1 of Support Base Plate 102: 1 - 10 cm
Thickness W2 of Support Base Plate 102: 1- 10 mm
Length W3 of Support Base Plate 102: 5 - 50 cm
Distance W4 from outer surface of Support Base Plate 102 (interface between the support base plate 102 and the anode) to Flow path 123: 0.1 - 4 mm
Thickness of Anode 103: 50 - 500 µm
(When the anode 103 includes an anode current collecting layer and an anode active layer:
Thickness of anode current collecting layer: 50 - 500 µm
Thickness of anode active layer: 5 - 30 µm)
Thickness of electrolyte layer 104: 3 - 50 µm
Thickness of cathode 106: 10 - 100 µm
Thickness of interconnector 107: 10 - 100 µm
Thickness of current collector 108: 50 - 500 µm
Dimensions that were described in relation to the segmented-in-series fuel cell may be adopted in relation to component elements that have not been mentioned in particular. Naturally, the present invention is not limited by the above values.

### EXAMPLES

### A. Preparation of cell

An NiO-8YSZ anode active layer (10 µm), an 8YSZ electrolyte layer (3 µm), and a GDC barrier layer (3 µm) were stacked on an NiO-8YSZ anode substrate (500 µm) and calcined together at 1400°C for 2 hours.

As shown in Tables 1 to 3, ten electrode materials (Nos. 1 to 10) containing (La_{0.6}Sr_{0.4}) (Co_{0.2}Fe_{0.8})O₃, six electrode materials (Nos. 11 to 16) containing (La_{0.8}Sr_{0.2})FeO₃, and six electrode materials (Nos. 17 to 22) containing La(Ni_{0.6}Fe_{0.4})O₃ were obtained.

The electrode materials that are represented by the same general formula and given different reference numbers are different in starting material, calcination condition, and trituration condition. Whether the electrode materials were synthesized according to a solid phase process or a liquid phase process is indicated in the tables.

The average particle diameter of the resulting pulverized matter was 200 µm. The pulverized matter was used for the measurement of composition distribution, which will be described below.

The pulverized matter was triturated with a ball mill. The average particle diameters of all electrode materials (powder) measured with a laser diffraction/scattering particle size distribution analyzer (LA-700, manufactured by Horiba Ltd.) were 0.3 µm or less.

A paste was prepared using the resulting powder, and the paste was processed into a film by screen printing to form a cathode (30 µm) on the barrier layer. The cathode was baked onto the barrier layer by being heated at 1000°C for 2 hours.

An SOFC was obtained through the above-described operation.

### B. Evaluation

### B-1. Measurement of composition distribution

The atomic concentration distribution of each element in the pulverized matter of the electrode material was measured by an EPMA. Specifically, measurements were carried out using a field emission electron probe microanalyzer (model number: JXA-8500F) from JEOL Co., Ltd. Next, the atomic concentration (mol%) of each of the A-site elements and each of the B-site elements in an oxide form was measured by EDS at ten spots within a randomly selected field of view. The ten spots had not formed pores as can be determined on an SEM image. Specifically, measurements were carried out using a field emission scanning electron microscope (model number: ULTRA55) from ZEISS (Germany).

Specifically, the concentrations of the A-site La and Sr were measured at ten spots in each of the Sample Nos. 1 to 10 to obtain the average La concentration and the standard deviation of the concentration at each spot as well as the average Sr concentration and the standard deviation of the concentration at each spot. Likewise, for the B-site Co and Fe, the average concentration and the standard deviation of the concentration at each spot were obtained. Moreover, for each of the Sample Nos. 1 to 10, the maximum standard deviation of the atomic concentration of the A-site element and the maximum standard deviation of the atomic concentration of the B-site element were obtained.

For each of the Sample Nos. 11 to 16, the maximum standard deviations of the concentrations of A-site La and Sr and B-site Fe were obtained in the same manner, and for each of the Sample Nos. 17 to 22, the maximum standard deviations of the concentrations of A-site La and Sr and B-site Fe were obtained in the same manner.

### B-2. Durability test

Power was continuously generated using the prepared SOFC cells. Conditions of power generation included a temperature of 750°C and a current density of 0.3 A/cm², and the rate of voltage drop (deterioration rate) per 1000 hours was calculated. Cells that had a deterioration rate of 1% or less were judged "good".

### C. Results

### C-1. Nos. 1 to 10: (La_{0 6}Sr_{0 4}) (Co_{0 2}Fe_{0 8})O₃

Among the samples Nos. 1 to 10, the results of measuring the concentrations and the results of calculating the averages and the standard deviations in Sample No. 1 are presented in Table 1 as one example. Table 2 shows the maximum value of the standard deviation of the atomic concentration of each element in Sample Nos. 1 to 10. For each sample, the larger of the maximum values of the standard deviation of the A site, and the larger of the maximum values of the standard deviation of the B site are underlined. Table 3 lists the larger maximum value of the standard deviation of the A site and the larger maximum value of the standard deviation of the B site shown in Table 2, the rate of voltage drop (deterioration rate) per 1000 hours, and the evaluation result on the rate of voltage drop of the Sample Nos. 1 to 10.

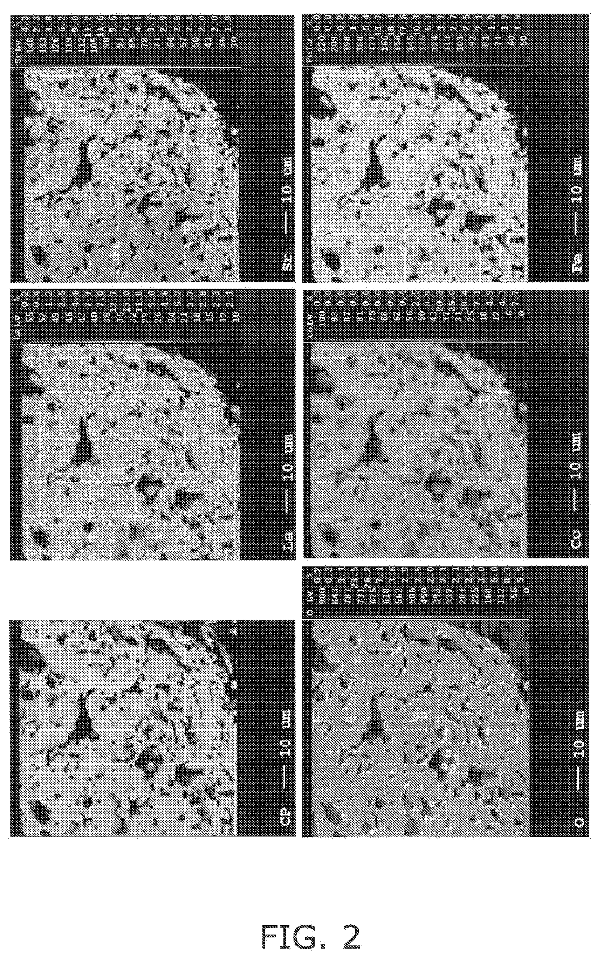

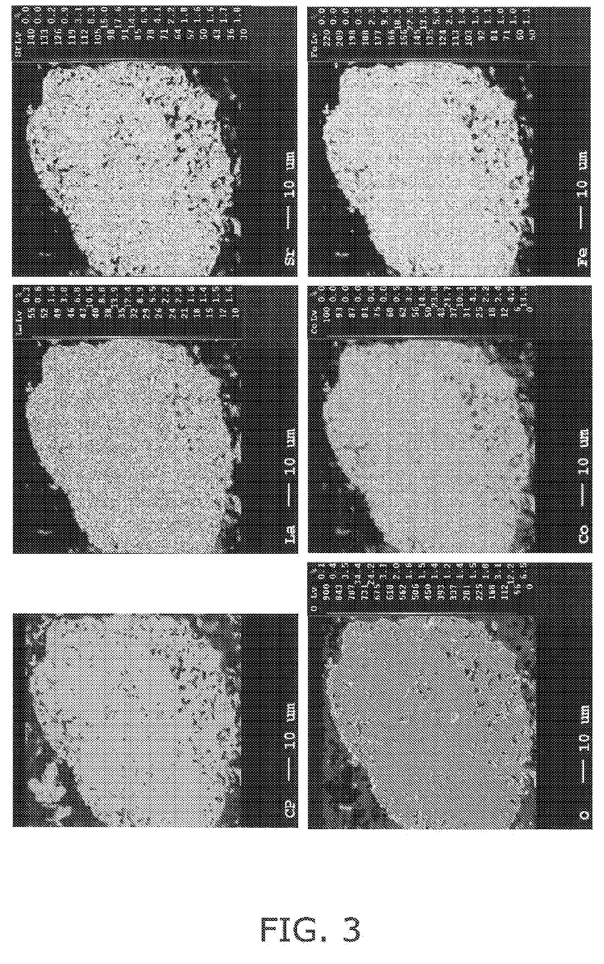

FIGs. 2 and 3 show SEM images and concentration mapping images of Sample Nos 1 and 7 over the same field of view. Actually, in FIGs. 2 and 3, portions where the atomic concentration is high are colored in red, and portions where the concentration is low are colored in blue.

**Table 1 Results of analyzing the concentrations at ten spots on (La_{0 6}Sr_{0 4})(Co_{0 2}Fe_{0 8})O₃ of Sample No. 1**

| Analyzed spot | La (mol%) | Sr (mol%) | Co (mol%) | Fe (mol%) |
|---|---|---|---|---|
| 1 | 17.1 | 30.9 | 6.9 | 45.1 |
| 2 | 19.4 | 28.7 | 6.5 | 45.4 |
| 3 | 24.4 | 22.3 | 7.9 | 45.4 |
| 4 | 24.1 | 22.5 | 8.6 | 44.8 |
| 5 | 22.1 | 28.8 | 7.7 | 42.1 |
| 6 | 29.7 | 20.1 | 9.1 | 41.1 |
| 7 | 32.5 | 22.5 | 10.3 | 34.7 |
| 8 | 38.3 | 16.8 | 9.5 | 35.4 |
| 9 | 25.6 | 20.3 | 10.4 | 43.7 |
| 10 | 19.5 | 26.8 | 7.3 | 46.4 |
| Average | 25.27 | 23.97 | 8.35 | 42.41 |
| Standard deviation | 6.23 | 4.34 | 1.36 | 3.99 |

**Table 2 Maximum value of the standard deviations of (La_{0.6}Sr_{0.4})(Co_{0.2}Fe_{0.8})O₃ of Sample Nos. 1 to 10**

| Sample No. | Synthesis method | Standard deviation | | | |
|---|---|---|---|---|---|
| | | A site | | B site | |
| | | La | Sr | Co | Fe |
| 1 | Solid process | 6.23 | 4.34 | 1.36 | 3.99 |
| 2 | Solid process | 3.12 | 4.11 | 0.82 | 1.54 |
| 3 | Solid process | 10.3 | 8.32 | 2.87 | 3.61 |
| 4 | Solid process | 1.56 | 0.89 | 0.68 | 0.56 |
| 5 | Solid process | 7.52 | 13.2 | 4.65 | 2.86 |
| 6 | Solid process | 11.5 | 6.32 | 3.15 | 4.18 |
| 7 | Liquid process | 0.05 | 0.04 | 0.1 | 0.05 |
| 8 | Liquid process | 0.27 | 0.46 | 0 | 0.07 |
| 9 | Liquid process | 1.13 | 1.03 | 0.68 | 0.36 |
| 10 | Liquid process | 0.2 | 0.25 | 0.03 | 0.05 |

**Table 3 Maximum value of the standard deviations and evaluation results of deterioration rate of (La_{0.6}Sr_{0.4})(Co_{0.2}Fe_{0.8})O₃ of Sample Nos. 1 to 10**

| Sample No. | Maximum value of A-site standard deviation | Maximum value of B-site standard deviation | Deterioration rate (%/1000 hr) | Evaluation result |
|---|---|---|---|---|
| 1 | 6.23 | 3.99 | 0.76 | Good |
| 2 | 4.11 | 1.54 | 0.63 | Good |
| 3 | 10.3 | 3.61 | 0.95 | Good |
| 4 | 1.56 | 0.68 | 0.65 | Good |
| 5 | 13.2 | 4.65 | 1.85 | Poor |
| 6 | 11.5 | 4.18 | 1.52 | Poor |
| 7 | 0.05 | 0.10 | 0.30 | Good |
| 8 | 0.46 | 0.07 | 0.52 | Good |
| 9 | 1.13 | 0.68 | 0.87 | Good |
| 10 | 0.25 | 0.05 | 0.45 | Good |

As shown in Tables 1 to 3 and FIGs. 2 and 3, Sample Nos. 1 to 4 and 7 to 10 had a suppressed deterioration rate. In these samples, the standard deviations (variations) of the atomic concentrations of the A-site elements were less than 10.5, and 10.3 or less in particular. The standard deviations of the atomic concentrations of the B-site elements were 3.99 or less.

On the other hand, in Sample Nos. 5 and 6 that showed a large deterioration rate, the standard deviations of the atomic concentrations of the A-site elements were 11.5 or greater, and the standard deviations of the atomic concentrations of the B-site elements were 4.18 or greater.

### C-2. Nos. 11 to 16: (La_{0 8}Sr_{0 2})FeO₃

Among the samples Nos. 11 to 16, the results of measuring the concentrations and the results of calculating the averages and the standard deviations in Sample No. 11 are presented in Table 4 as one example. Table 5 shows the maximum value of the standard deviation of the atomic concentration of each element for Sample Nos. 11 to 16. For each sample, the larger of the maximum values of the standard deviation for the A site, and the larger of the maximum values of the standard deviation for the B site are underlined. Table 6 lists the larger maximum value of the standard deviation for the A site and the larger maximum value of the standard deviation for the B site shown in Table 5, the rate of voltage drop (deterioration rate) per 1000 hours, and the evaluation result on the rate of voltage drop of the Sample Nos. 11 to 16.

**Table 4 Results of analyzing the concentrations at ten spots on (La_{0 8}Sr_{0 2})FeO₃ of Sample No. 11**

| Analyzed spot | La (mol%) | Sr (mol%) | Fe (mol%) |
|---|---|---|---|
| 1 | 36.4 | 8.8 | 54.8 |
| 2 | 35.9 | 9.1 | 55.0 |
| 3 | 30.5 | 11.4 | 58.1 |
| 4 | 36.1 | 8.8 | 55.1 |
| 5 | 41.8 | 6.5 | 51.7 |
| 6 | 36.9 | 8.5 | 54.6 |
| 7 | 49.7 | 6.1 | 44.2 |
| 8 | 28.2 | 11.1 | 60.7 |
| 9 | 36.8 | 8.7 | 54.5 |
| 10 | 42.0 | 6.6 | 51.4 |
| Average | 37.43 | 8.56 | 54.01 |
| Standard deviation | 5.74 | 1.71 | 4.16 |

**Table 5 Maximum value of the standard deviations of (La_{0.8}Sr_{0.2})FeO₃ of Sample Nos. 11 to 16**

| Sample No. | Synthesis method | Standard deviation | | |
|---|---|---|---|---|
| | | A site | | B site |
| | | La | Sr | Fe |
| 11 | Solid process | 5.74 | 1.71 | 4.16 |
| 12 | Solid process | 4.28 | 2.95 | 3.25 |
| 13 | Solid process | 7.91 | 2.77 | 3.68 |
| 14 | Solid process | 10.95 | 2.65 | 4.98 |
| 15 | Liquid process | 1.04 | 1.73 | 0.65 |
| 16 | Liquid process | 0.43 | 0.09 | 0.21 |

**Table 6 Maximum value of the standard deviations and evaluation results of deterioration rate of (La_{0.8}Sr_{0.2})FeO₃ Sample of Nos. 11 to 16**

| Sample No. | Maximum value of A-site standard deviation | Maximum value of B-site standard deviation | Deterioration rate (%/1000 hr) | Evaluation result |
|---|---|---|---|---|
| 11 | 5.74 | 4.16 | 0.34 | Good |
| 12 | 4.28 | 3.25 | 0.42 | Good |
| 13 | 7.91 | 3.68 | 0.55 | Good |
| 14 | 10.95 | 4.98 | 1.23 | Poor |
| 15 | 1.73 | 0.65 | 0.32 | Good |
| 16 | 0.43 | 0.21 | 0.22 | Good |

As shown in Tables 4 to 6, Sample Nos. 11 to 13 and 15 to 16 had a suppressed deterioration rate. In these samples, the standard deviations (variations) of the atomic concentrations of the A-site elements were less than 7.91. The standard deviations of the atomic concentrations of the B-site elements were 4.16 or less.

On the other hand, in Sample No. 14 that showed a large deterioration rate, the standard deviation of the atomic concentration of an A-site element was relatively large at 10.95. The standard deviation of the atomic concentration of the B-site element was relatively large at 4.98.

### C-3. Nos. 17 to 22: La(Ni_{0.6}Fe_{0.4})O₃

Among the samples Nos. 17 to 22, the results of measuring the concentrations and the results of calculating the averages and the standard deviations in Sample No. 17 are presented in Table 7 as one example. Table 8 shows the maximum value of the standard deviation of the atomic concentration of each element for Sample Nos. 17 to 22. For each sample, the larger of the maximum values of the standard deviation for the A site, and the larger of the maximum values of the standard deviation for the B site are underlined. Table 9 lists the larger maximum value of the standard deviation for the A site and the larger maximum value of the standard deviation for the B site shown in Table 8, the rate of voltage drop (deterioration rate) per 1000 hours, and the evaluation result on the rate of voltage drop of the Sample Nos. 17 to 22.

**Table 7 Results of analyzing the concentrations at ten spots on La(Ni_{0.6}Fe_{0.4})O₃ of Sample No. 17**

| Analyzed spot | La (mol%) | Ni (mol%) | Fe (mol%) |
|---|---|---|---|
| 1 | 40.3 | 28.7 | 31.0 |
| 2 | 37.4 | 33.9 | 28.7 |
| 3 | 48.7 | 31.5 | 19.8 |
| 4 | 58.1 | 25.4 | 16.5 |
| 5 | 41.8 | 32.0 | 26.2 |
| 6 | 40.9 | 34.8 | 24.3 |
| 7 | 42.1 | 29.9 | 28.0 |
| 8 | 59.2 | 23.9 | 16.9 |
| 9 | 35.7 | 36.4 | 27.9 |
| 10 | 47.9 | 28.9 | 23.2 |
| Average | 45.21 | 30.54 | 24.25 |
| Standard deviation | 7.72 | 3.79 | 4.81 |

**Table 8 Maximum value of the standard deviations of La(Ni_{0.6}Fe_{0.4})O₃ of Sample Nos. 17 to 22**

| Sample No. | Synthesis method | Standard deviation | | |
|---|---|---|---|---|
| | | A site | B site | |
| | | La | Ni | Fe |
| 17 | Solid process | 7.72 | 3.79 | 4.81 |
| 18 | Solid process | 10.5 | 6.35 | 1.23 |
| 19 | Solid process | 5.23 | 4.35 | 2.35 |
| 20 | Solid process | 3.52 | 4.23 | 4.85 |
| 21 | Liquid process | 1.35 | 1.23 | 0.85 |
| 22 | Liquid process | 0.35 | 0.33 | 0.36 |

**Table 9 Maximum value of the standard deviations and evaluation results of deterioration rate of La(Ni_{0.6}Fe_{0.4})O₃ of Sample Nos. 17 to 22**

| Sample No. | Maximum value of A-site standard deviation | Maximum value of B-site standard deviation | Deterioration rate (%/1000 hr) | Evaluation result |
|---|---|---|---|---|
| 17 | 7.72 | 4.81 | 0.78 | Good |
| 18 | 10.5 | 6.35 | 1.65 | Poor |
| 19 | 5.23 | 4.35 | 0.75 | Good |
| 20 | 3.52 | 4.23 | 0.68 | Good |
| 21 | 1.35 | 1.23 | 0.46 | Good |
| 22 | 0.35 | 0.36 | 0.45 | Good |

As shown in Tables 7 to 9, Sample Nos. 17 and 19 to 22 had a suppressed deterioration rate. In these samples, the standard deviations (variations) of the atomic concentrations of the A-site elements were 7.72 or less.

On the other hand, in Sample No. 14 that showed a large deterioration rate, the standard deviation of the atomic concentration of an A-site element was relatively large at 10.5.

### C-4. Conclusion

From the results presented above, it appears that when the atomic distribution is relatively uniform (the standard deviation is small), deterioration of the cathode is inhibited.

Note that, in all the materials, the macroscopic composition was verified by a wet analysis (ICP analysis) to be identical to the composition of the starting materials introduced.

The relationship between atomic distribution and cathode deterioration can be described as follows.

Even if the overall composition of a powdery cathode material is identical to that of the starting materials introduced, if a very small portion of the cathode material reveals that the elements are not present (distributed) uniformly, the composition of that portion is different from the overall composition. Such a portion exhibits lowered electric conductivity and catalytic activity, and thus barely functions as a cathode upon power generation. Therefore, when such a cathode material is used for a fuel cell, an electric current flows so as to avoid such an inactive portion, and the current density around the inactive portion is increased. It thus appears that the surrounding portion deteriorates at an accelerated rate.

Note that whereas the variations in atomic concentration calculated using pulverized matter were presented in the tables given above, the state of (variation in) atomic distribution obtained with triturated matter was verified to be not different from that obtained with pulverized matter in regard to all materials since even when triturated matter was used, the diameter of the spot on which an analysis was performed was smaller than the diameter of the triturated matter.

## Claims

1. An electrode material comprising a complex oxide having a perovskite structure represented by a general formula ABO₃, and
each A-site element having a standard deviation of an atomic concentration of 10.3 or less, the atomic concentration being measured by energy dispersive X-ray spectroscopy at ten spots within one field of view.

2. The electrode material according to claim 1, wherein
the A site includes at least one of La and Sr atoms.

3. The electrode material according to claim 1, wherein
the complex oxide is (LaSr)(CoFe)O₃, (LaSr)FeO₃, (LaSr)CoO₃, La(NiFe)O₃, or (SmSr)CoO₃.

4. The electrode material according to claim 1, wherein
the one field of view is a region observable with an electron microscope at 100 to 5000-fold magnification.

5. The electrode material according to claim 1, wherein
the ten spots each have a size of 1 µm or less.

6. The electrode material according to claim 1, wherein
locations of the ten spots are selected within the one field of view according to ten-scale concentration levels set based on a distribution of the atomic concentration within the one field of view.

7. The electrode material according to claim 6, wherein
the ten-scale concentration levels are set across an entire range of the atomic concentration distribution.

8. A solid oxide fuel cell comprising:
a cathode composed of an electrode material of claim 1;
an anode; and
a solid electrolyte layer disposed between the cathode and the anode.

9. A solid oxide fuel cell comprising:
an porous substrate of insulation having a gas passage inside;
a power generating element composed of an anode, a solid electrolyte layer, and a cathode stacked in this order on the porous substrate; and
an interconnector composed of an electrode material of claim 1, the interconnector being connected to the power generating element.
